# EUROPEAN PATENT SPECIFICATION

(11) **EP 3 393 857 B1**
(45) Date of publication and mention of the grant of the patent: **04.09.2019**
(21) Application number: 16834136.0
(22) Date of filing: 23.12.2016
(51) Int. Cl.: B60R 11/02

(54) **MULTI-FUNCTIONAL DRAWER COVER**
MULTI-FUNKTIONALE SCHUBLADENABDECKUNG
COUVERCLE DE TIROIR MULTI-FONCTIONNEL

(30) Priority: 23.12.2015 TR 201516706
(43) Date of publication of application: 31.10.2018
(73) Proprietor: Ford Otomotiv Sanayi Anonim Sirketi, Istanbul (TR)
(72) Inventor: OZTURK, Gokmen, Sancaktepe/Istanbul (TR); PEKCAKAR, Erkan, Sancaktepe/Istanbul (TR); YILDIRIM, Nihat, Sancaktepe/Istanbul (TR); SARPCA, Irem, Sancaktepe/Istanbul (TR)
(74) Representative: Dericioglu Kurt, Ekin
(86) International application number: PCT/TR2016/050527
(87) International publication number: WO 2017/111759

(56) References cited:
- WO-A1-01/58721
- DE-A1-102012 208 909
- DE-U1- 9 312 439
- GB-A- 2 348 076
- KR-A- 20090 022 079
- US-A- 4 868 862

## Description

### Field of the Invention

The present invention relates to a multi-functional drawer cover, which enables the user to use and store portable electronic devices (laptop computer, tablet computer, mobile phone, etc.) in the vehicle without requiring an external apparatus, and can be mounted on a drawer, and which is easy to mount and disassemble.

### Background of the Invention

Smart devices (laptop computers, tablet computers, mobile phones, etc.) are technological devices which cannot be given up by people in daily life. Smart devices allow use at all conditions by means of their practical features such as easy use, rapid access, portability, etc.

Particularly in the recent years, electronic devices have started to substantially steer human life. For example, the phones which initially only had functions of making telephone calls and sending text messages have undergone a major change process. Among the mobile devices, smartphones have become undistinguishable from computers.

Nowadays, portable electronic devices (laptop computers, tablet computers, mobile phones, etc.) can enable to carry out procedures such as data transmission, internet access, transmission of e-mail and instant messages, displaying digital content, etc.

By means of the navigation ability of portable electronic devices, the places that are desired to be traveled can be reached by providing time and cost saving. Free internet access can be provided by Wi-Fi feature and can reduce internet costs in trips. These features substantially increase use of the portable electronic devices in vehicles. A holder is needed in order to prevent these devices from causing any danger in the vehicle particularly during driving.

Various methods have been developed in the state of the art for use of portable electronic devices in vehicles. One of these methods is to fix the electronic device to a point in the vehicle. The users can fix their portable electronic devices to a preferred position in the vehicle by the help of an external apparatus. However, the said application may restrict movement of the user and the other individuals in the vehicle.

Another state-of-the-art method for use of the smart devices in vehicles is to control smart devices by two hands without using any apparatus. In the said applications, if the user prefers not to use the portable electronic device; in order to prevent damage and stealing of the device, the device must be kept in its case, bag or a protected compartment if there are any.

In the state of the art, there is no multi-functional drawer cover, which does not restrict the area of use and does not occupy space in the vehicle, and eliminates the requirement of fixing, and which protects the devices against any danger and in addition, provides a flat surface for various use when closed.

The document WO 01/58721 A1 discloses a multi-functional drawer cover according to the preamble of claim 1.

### Objectives of the Invention

The objective of the present invention is to provide a multi-functional drawer cover which does not limit movement of the user in the vehicle and enables to use and store the electronic devices avoiding damage, and which is easy to mount and disassemble.

Another objective of the present invention is to provide a multi-functional drawer cover which does not occupy space in the vehicle and serves as an internal holder.

A further objective of the present invention is to provide a multi-functional drawer cover, which, when closed, provides a flat surface for the user to be used in the vehicle.

Another objective of the present invention is to provide a multi-functional drawer cover which eliminates the requirement of keeping a protective casing such as a bag or a case in the vehicle for protecting the electronic devices.

### Summary of the Invention

A multi-functional drawer cover; which is developed to fulfill the objective of the present invention, and which is defined in the first claim and the claims dependent thereon; is mounted on the drawer which is preferably used for resting arms and storing objects in the vehicle. The drawer cover has a body. There is a motion groove on the lower portion of the body. The body can move forward and backward on this motion groove. A lock is provided on the body. The lock enables to stop the forward and backward movement of the body on the motion groove at a preferred point. The body includes thereon a holder which is useful for holding the preferred electronic device fixed in the vehicle. The holder comprises a fixed lower part and a movable upper part. There are teeth on the upper part which hold the electronic device. A rotator is provided between the lower part and the upper part of the holder. The rotator is the element which moves the upper part. There is provided a shaft, which passes through the first shaft slot and the second shaft slot of the body and the holder, respectively, and which allows movement of the body and the holder.

### Detailed Description of the Invention

A multi-functional drawer cover developed to fulfill the objective of the present invention is illustrated in the accompanying figures, in which:

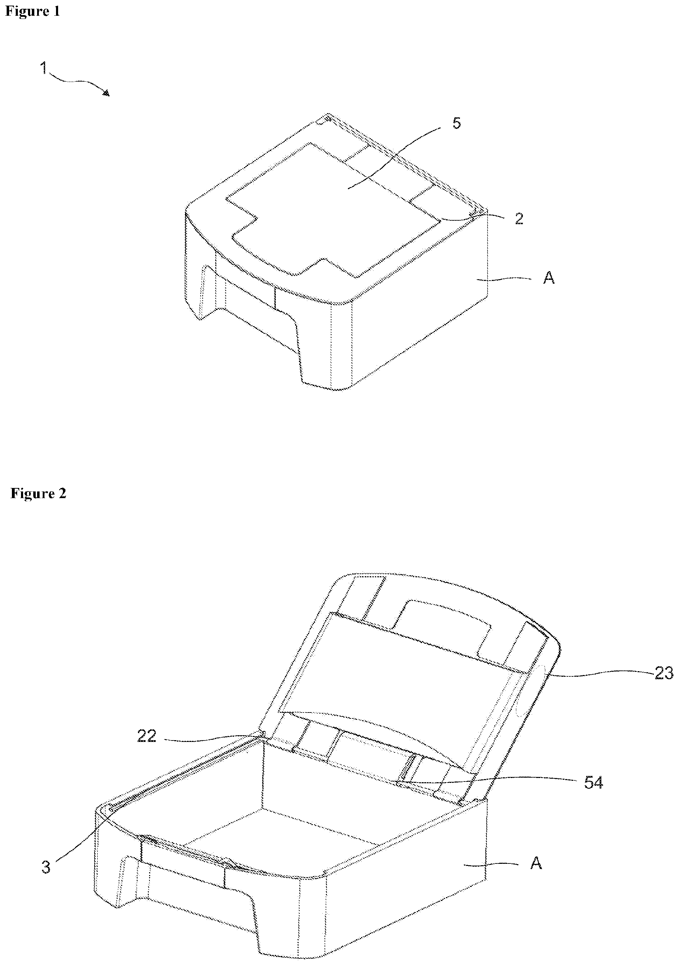

- **Figure 1.**: is a perspective view of the multi-functional drawer cover when closed.
- **Figure 2.**: is a front perspective view of the multi-functional drawer cover when open.

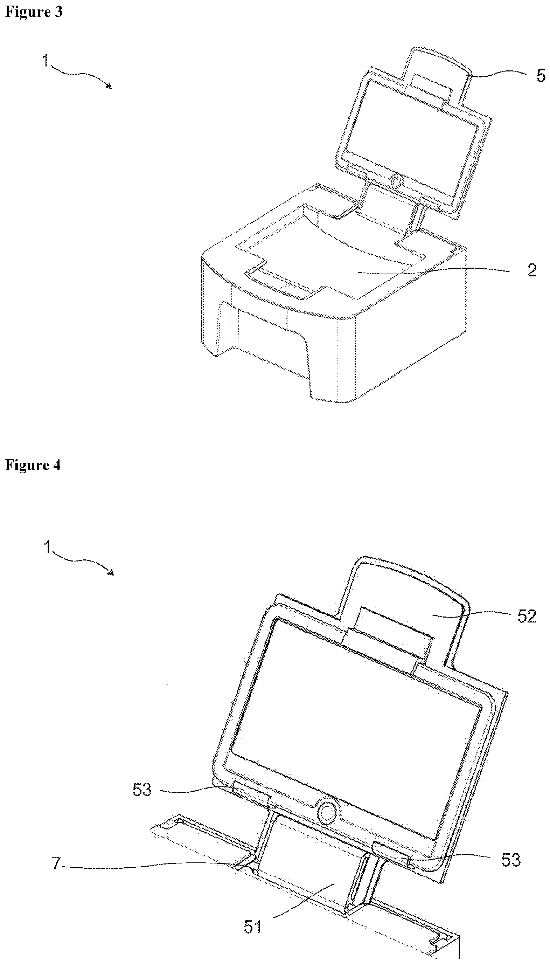

- **Figure 3.**: is a perspective view of the multi-functional drawer cover when the body is closed and the holder is open.
- **Figure 4.**: is a perspective view of the holder.

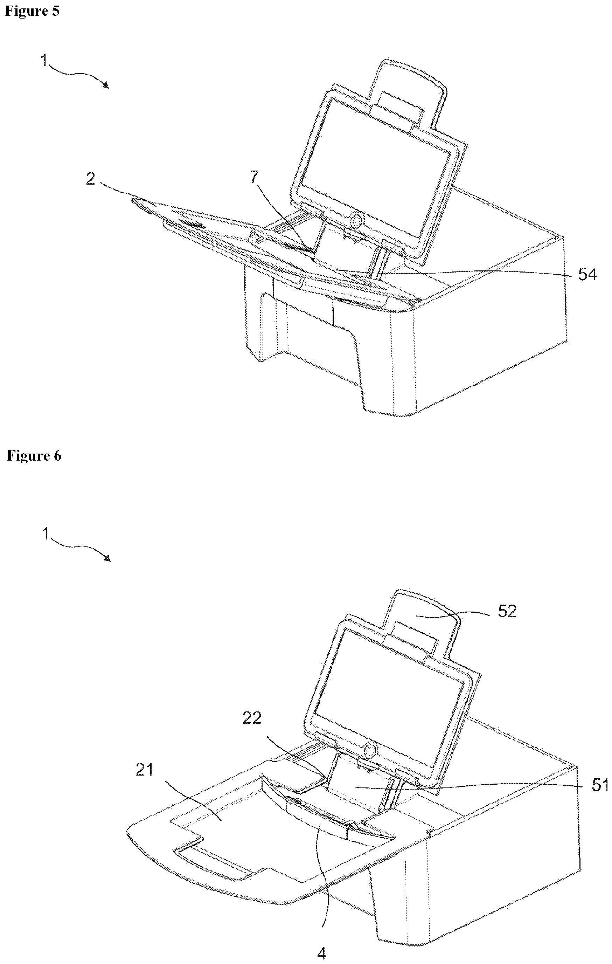

- **Figure 5.**: is a perspective view of the body and the holder in open position.
- **Figure 6.**: is a perspective view of the body and the holder in an open position where they are perpendicular to each other.

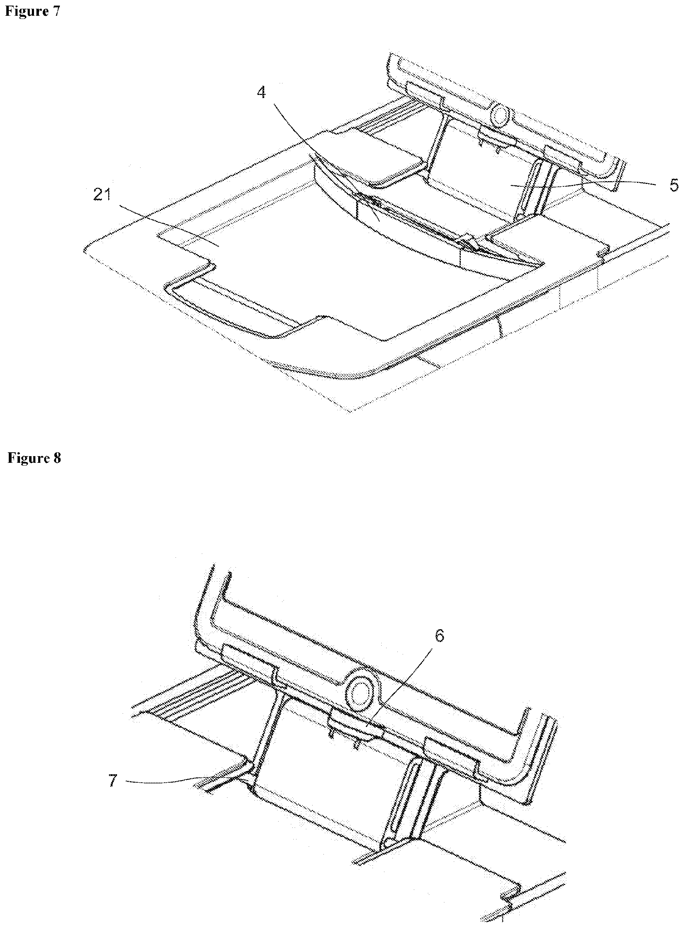

- **Figure 7.**: is a perspective view of the lock and the holder.
- **Figure 8.**: is a perspective view of the rotator.

The components shown in the figures are given reference numbers as follows:
1. Multi-functional drawer cover.
2. Body
   21. Holder slot
   22. First shaft slot
   23. Motion Slot
3. Motion groove
4. Lock
5. Holder
   51. Lower part
   52. Upper part
   53. Teeth
   54. Second shaft slot
6. Rotator
7. Shaft

### A. Drawer

A multi-functional drawer cover (1), which enables the user to use and store portable electronic devices (laptop computer, tablet computer, mobile phone, etc.) in the vehicle, and can be mounted on a drawer (A), and which is easy to mount and disassemble, basically comprises
- at least one body (2) which can move horizontally and vertically, enables to house the electronic device, and provides a flat surface when closed,
- at least one holder (5) which is located on the body (2) and can move circularly in vertical axis, and on which a preferred electronic device is placed.

A body (2) is provided in one embodiment of the invention. The body (2) is an element which is preferably arranged on a drawer (A), covers the inner chamber of the drawer (A), and houses the electronic device. The body (2) can be of any geometry (circular, elliptical, rectangular, etc.) and size. In one embodiment of the invention, three sides of the body (2) are planar while one side thereof is circular. A holder slot (21) is provided on the body (2). The holder slot (21) is the slot in which the holder (5) that performs the function of fixing the preferred electronic device is placed. The first shaft slot (22) is provided on one of the planar sides of the body (2). The first shaft slot (22), into which a shaft (7) is disposed, extends from one end of the planar side of the body (2) towards the other end thereof. There is at least one motion slot (23) on the body (2). The motion slot (23) is preferably located on the surface of the body (2) facing the drawer (A) and on the planar side of the body (2) that does not include the first shaft slot (22). In the preferred embodiment of the present invention, the motion slot (23) is located on the two planar sides of the body (2) that do not include the first shaft slot (22). The motion slot (23) supports movement of the body (2) by fitting on the motion groove (3) which enables horizontal movement of the body (2). The motion slot (23) is obtained by means of the protrusion formed by the holder slot (21), which is provided on the body (2), on the surface of the body (2) facing the drawer (A). The motion slot (23) is the area which remains between the protrusion formed by the holder slot (21) and the edge of the body (2). The body (2) also provides a flat surface for the use when it is closed.

A motion groove (3) is provided in one embodiment of the invention. The motion groove (3) is the structure on which the body (2) or the motion slots (23) sit. The motion groove (3) forms the area in which the body (2) will move horizontally by the help of the shaft (7) that moves forward and backward therein. By means of the motion groove (3), the body (2) is enabled to move at the preferred direction and distance on the drawer (A). While the motion groove (3) can be a piece independent from the body (2), it can also be integral with the body (2). In the preferred embodiment of the invention, the motion groove (3) is a piece independent from the body (2).

The multi-functional drawer cover (1) comprises at least one lock (4). The lock (4) enables the body (2) to be fixed during the horizontal movement of the body (2) on the drawer. The lock (21) is positioned on the body (2), preferably in the holder slot (21). The lock (4) comprises at least one pressure member. By pressing the pressure member provided on the lock (4), movement of the body (2) in the motion groove (3) is fixed when the body (2) is brought to the preferred position.

The multi-functional drawer cover (1) comprises at least one holder (5). The holder (5) enables to keep the electronic device at a fixed position. The holder (5) is the member on which the electronic device is placed, and which stores the electronic device when necessary and enables use of the electronic device when required. The holder (5) is positioned on the body (2) such that it can move. The holder (5) can be a single piece while it can also be comprised of a plurality of parts. In the preferred embodiment of the invention, the holder (5) is comprised of two parts. The holder (5) comprises a lower part (51) and an upper part (52). The lower part (51) enables the holder (5) to be fixed on the body (2). The lower part (51) can be movable or fixed. There is an upper part (52), which is movable, on the upper portion of the lower part (51). The upper part (52) is the element on which the electronic device is placed and which holds the electronic device. There are teeth (53) on the upper part (52). The teeth (53) are the structures used for fixing the preferred electronic device onto the holder (5). There may be preferred number of teeth (53) on the holder (5). In one embodiment of the invention, there are three teeth (53) on the holder (5). The teeth (53) can be positioned on the preferred points on the holder (5). In one embodiment of the invention, one of the teeth (53) is positioned on the upper portion of the upper part (52) of the holder (5), while two of them are positioned on the lower portion of the upper part (52) of the holder (5). The teeth (53) are movable. The teeth (53) can be adjusted according to the size of the electronic device preferred to be fixed and can adapt to electronic devices of various sizes. There is provided a second shaft slot (54) on the edge of the lower part (51) of the holder (5) facing the body (2). The shaft (7) passing through the second shaft slot (54) enables opening and closing of the holder (5) by moving at an angle between x axis and y axis of the holder (5).

When the holder (5) is closed, it is in the holder slot (21) located on the body (2). When the electronic device is needed to be used or when it will be fixed on the holder (5), the holder (5) is removed from the holder slot (21) and brought to the preferred position. The lower part (51) of the holder (5) can make a circular movement of at least 180° on the shaft (7). The user can fix the holder (5) on a preferred position along the area covered by this angle.

A rotator (6) is provided in one embodiment of the invention. The rotator (6) provides the rotation function to the holder (5), which holds the electronic device, by rotating the holder (5) circularly in the vertical axis at a preferred angle. The rotator (6) can be positioned on a preferred point on the holder (5). In one embodiment of the invention, the rotator (6) is positioned between the lower part (51) and the upper part (52) of the holder (5). The rotator (6) enables circular movement of the holder's (5) upper part (52), which is the part holding the electronic device, with respect to the lower part (51). The user can rotate the electronic device to a preferred direction by means of the rotator (6).

A shaft (7) is provided in one embodiment of the invention. The shaft (7) is the member which enables movement of the body (2) and the holder (5) at a preferred direction. The shaft (7) also connects the body (2) and the holder (5) to each other thereby enabling them to move together. The shaft (7) is placed into the first shaft slot (22) provided on the body (2) and the second shaft slot (54) provided on the holder (5). The shaft (7), by being engaged to the motion groove (3) from both ends thereof, enables the body (2) to move more easily and also enables the body (2) and the holder (5) to remain only in the motion groove (3).

Use of the multi-functional drawer cover (1) provided in this embodiment of the invention is realized as follows: The multi-functional drawer cover (1) comprises a body (2). The body (2) is a structure which is positioned on a surface, preferably on a drawer (A); covers the inner chamber of the drawer (A) on which it is positioned; provides a flat surface to the user when it is closed; and accommodates a holder (5). When the holder (5) is closed, i.e. when it is not being used, it is located in the body (2). There is a holder slot (21) in which the holder (5) is kept on the body (2). There is provided the first shaft slot (22) on and along one of the sides of the body (2). A shaft (7), which enables movement of the body (2), is placed into the first shaft slot (22). The motion slot (23) is located on the surface of the body (2) preferably facing the element on which it is placed. The motion slot (23) sits on the motion groove (3) and enables horizontal movement of the body (2). There is provided a lock (4) on the body (2). The lock (4) enables the body (2) to be fixed at a preferred position horizontally. A holder (5) is located on the body (2). The holder (5) enables the electronic device to be kept at a fixed position in the vehicle, and to be moved and protected. The holder (5) is comprised of two parts, namely the lower part (51) and the upper part (52). The lower part (51) enables the holder (5) to be fixed on the body (2). The upper part (52) is the member on which the electronic device is placed. There is a preferred number of teeth (53) on the upper part (52). In one embodiment of the invention, there are three teeth (53) on the upper part (52). The teeth (53) are movable and can be positioned according to the size of the electronic device. There is a rotator (6) between the lower part (51) and the upper part (52) of the holder (5). The rotator (6) enables the holder's (5) upper part (52) and thus the electronic device to be rotated around an orbit. A shaft (7) passes through the first shaft slot (22) of the body (2) and the second shaft slot (54) of the holder (5). The shaft (7), by moving in the motion groove (3) located under the body (2), enables the body (2) to move forward and backward and allows the holder (5) to open and close.

The multi-functional drawer cover (1) of the present invention can be fixed on any drawer in the vehicle. The electronic device is positioned on the holder (5) and the holder (5) is stored in the area provided on the body (2). The user can open the holder and use the electronic device when preferred. Since the holder (5) is stored in the area within the body (2) such that it will not be seen from outside when it is closed, the electronic device can be kept safe in the vehicle. The holder (5) forms a covered surface on the body (2) when it is in the body (2), and this way the open side of the drawer is closed as a flat surface. Since the electronic device is stored in a slot provided on the body (2) in the vehicle, protective casings such as bags and cases are not needed.

## Claims

1. A multi-functional drawer cover (1), which enables to use and store electronic devices in the vehicle, and can be mounted on a drawer, and which is easy to mount and disassemble, **characterized by**
- at least one body (2) which can move horizontally and vertically, enables to house the electronic device, and covers the top of the drawer,
- at least one holder (5), on which the electronic device is placed, and which can move circularly in vertical axis and forms a flat surface by covering the upper surface of the body (2) when it is closed,
- at least one rotator (6) which enables to rotate the holder (5) circularly perpendicular to the body (2) or the drawer (A).

2. Multi-functional drawer cover (1) according to Claim 1, **characterized by** the body (2), which is preferably arranged on a drawer (A), covers the inner chamber of the drawer (A) and houses the electronic device, comprises a holder slot (21) in which the electronic device is placed in order to be fixed.

3. Multi-functional drawer cover (1) according to Claim 2, **characterized by** the body (2), which is of different geometries, and whose three sides are planar while one side is circular.

4. Multi-functional drawer cover (1) according to Claim 2, **characterized by** the body (2) comprising a first shaft slot (22) which is located on one of the planar sides thereof and which extends from one end of the planar side to the other end thereof and a motion slot (23) on its surface facing the drawer (A) and preferably on the planar side thereof that does not include the first shaft slot (22)

5. Multi-functional drawer cover (1) according to Claim 2, **characterized by** the body (2), which comprises two motion slots (23).

6. Multi-functional drawer cover (1) according to Claim 1, **characterized by** at least one motion groove (3), on or in which the motion slots (23) sit, which restricts horizontal movement of the body (2) along the preferred area, and which is integral with the body (2) or is independent from the body (2).

7. Multi-functional drawer cover (1) according to Claim 1, **characterized by** at least one lock (4), which enables the body (2) to be fixed at a preferred position during horizontal movement of the body (2), and which is positioned on the holder slot (21) provided on the body (2).

8. Multi-functional drawer cover (1) according to Claim 1, **characterized by** the holder (5), which is positioned on the body (2) on which the electronic device is placed, and which is comprised of a single piece or a plurality of parts.

9. Multi-functional drawer cover (1) according to Claim 8, **characterized by** the holder (5) comprising at least one fixed lower part (51) which enables integration thereof to the body (2) and at least one upper part (52), which is movable and located at the upper portion of the lower part (51), and which preferably holds the electronic device.

10. Multi-functional drawer cover (1) according to Claim 8, **characterized by** the holder (5) comprising at least one tooth (53), which is located on the upper part (52), can be arranged onto the preferred points on the upper part (52), and is used for fixing the electronic device to the upper part (52).

11. Multi-functional drawer cover (1) according to Claim 8, **characterized by** the holder (5) comprising three teeth (53) one of which is positioned on the upper portion and two of which are positioned on the lower portion of the upper part (52).

12. Multi-functional drawer cover (1) according to Claim 8, **characterized by** the holder (5) comprising teeth (53) which are movable, can be adjusted according to the size of the electronic device and can hold electronic devices of various sizes.

13. Multi-functional drawer cover (1) according to Claim 8, **characterized by** the holder (5), wherein a second shaft slot (54) is provided on the edge of the lower part (51) facing the body (2).

14. Multi-functional drawer cover (1) according to Claim 1, **characterized by** at least one rotator (6), which is positioned between the lower part (51) and the upper part (52) of the holder (5), which provides rotation function to the holder (5) by rotating the holder (5) in the vertical axis at a preferred angle.

15. Multi-functional drawer cover (1) according to Claim 1, **characterized by** the shaft (7), which enables movement of the body (2) and the holder (5) at the preferred direction and is placed into the first shaft slot (22) provided on the body (2) and the second shaft slot (54) provided on the holder (5), and which, upon fitting into the motion groove (3) from both ends thereof, enables movement of the body (2).

## Patentansprüche

1. Multifunktionale Schubladenabdeckung (1), die die Verwendung und Aufbewahrung von elektronischen Vorrichtungen im Fahrzeug ermöglicht und auf einer Schublade montiert werden kann und die einfach zu montieren und zu demontieren ist, **gekennzeichnet durch**
- mindestens einen Körper (2), der sich horizontal und vertikal bewegen kann, die Aufnahme der elektronischen Vorrichtung ermöglicht und die Oberseite der Schublade abdeckt,
- mindestens einen Halter (5), auf dem sich die elektronische Vorrichtung platziert und der sich kreisförmig in vertikaler Achse bewegen kann und eine ebene Fläche bildet, indem er die Oberseite des Körpers (2) im geschlossenen Zustand bedeckt,
- mindestens einen Rotator (6), der es ermöglicht, den Halter (5) kreisförmig senkrecht zum Körper (2) oder der Schublade (A) zu drehen.

2. Multifunktionale Schubladenabdeckung (1) nach Anspruch 1, **gekennzeichnet durch** den Körper (2), der vorzugsweise auf einer Schublade (A) angeordnet ist, den Innenraum der Schublade (A) abdeckt und die elektronische Vorrichtung aufnimmt, mit einem Halteschlitz (21), in dem die elektronische Vorrichtung zur Befestigung platziert ist.

3. Multifunktionale Schubladenabdeckung (1) nach Anspruch 2, **gekennzeichnet durch** den Körper (2), der von unterschiedlicher Geometrie ist und dessen drei Seiten plan sind, während eine Seite kreisförmig ist.

4. Multifunktionale Schubladenabdeckung (1) nach Anspruch 2, **gekennzeichnet durch** den Körper (2) einen ersten Schaftschlitz (22) umfasst, der sich auf einer seiner ebenen Seiten platziert sich von einem Ende der ebenen Seite zu dem anderen Ende davon erstreckt, und einen Bewegungsschlitz (23) auf seiner der Schublade (A) zugewandten Oberfläche und vorzugsweise auf seiner ebenen Seite, der den ersten Schaftschlitz (22) nicht beinhaltet.

5. Multifunktionale Schubladenabdeckung (1) nach Anspruch 2, **gekennzeichnet durch** den Körper (2), der zwei Bewegungsschlitze (23) umfasst.

6. Multifunktionale Schubladenabdeckung (1) nach Anspruch 1, **gekennzeichnet durch** mindestens eine Bewegungsnut (3), auf oder in der die Bewegungsschlitze (23) sitzen, die die horizontale Bewegung des Körpers (2) entlang des bevorzugten Bereichs einschränkt und die mit dem Körper (2) integriert oder unabhängig vom Körper (2) ist.

7. Multifunktionale Schubladenabdeckung (1) nach Anspruch 1, **gekennzeichnet durch** mindestens ein Schloss (4), das es ermöglicht, den Körper (2) während der horizontalen Bewegung des Körpers (2) in einer bevorzugten Position zu fixieren, und das auf dem am Körper (2) vorgesehenen Halteschlitz (21) positioniert ist.

8. Multifunktionale Schubladenabdeckung (1) nach Anspruch 1, **gekennzeichnet durch** den Halter (5), der auf dem Körper (2) positioniert ist, auf dem die elektronische Vorrichtung platziert ist, und der aus einem einzigen Stück oder einer Vielzahl von Teilen besteht.

9. Multifunktionale Schubladenabdeckung (1) nach Anspruch 8, **gekennzeichnet durch** den Halter (5) mindestens einen festen Unterteil (51), der deren Integration in den Körper (2) ermöglicht, und mindestens einen Oberteil (52) umfasst, der beweglich ist und sich am oberen Teil des Unterteils (51) platziert ist und vorzugsweise die elektronische Vorrichtung hält.

10. Multifunktionale Schubladenabdeckung (1) nach Anspruch 8, **gekennzeichnet durch** den Halter (5) mindestens einen Zahn (53) umfasst, der sich am Oberteil (52) platziert ist, an den bevorzugten Punkten am Oberteil (52) anordenbar ist und zur Befestigung der elektronischen Vorrichtung am Oberteil (52) dient.

11. Multifunktionale Schubladenabdeckung (1) nach Anspruch 8, **gekennzeichnet durch** den Halter (5) drei Zähne (53) umfasst, von denen einer auf dem oberen Abschnitt und zwei auf dem unteren Abschnitt des Oberteils (52) positioniert sind.

12. Multifunktionale Schubladenabdeckung (1) nach Anspruch 8, **gekennzeichnet durch** den Halter (5) mit beweglichen Zähnen (53), die entsprechend der Größe der elektronischen Vorrichtung verstellbar sind und elektronische Vorrichtungen unterschiedlicher Größe halten können.

13. Multifunktionale Schubladenabdeckung (1) nach Anspruch 8, **gekennzeichnet durch** den Halter (5), wobei ein zweiter Schaftschlitz (54) an der dem Körper (2) zugewandten Kante des Unterteils (51) vorgesehen ist.

14. Multifunktionale Schubladenabdeckung (1) nach Anspruch 1, **gekennzeichnet durch** mindestens einen Rotator (6), der zwischen dem Unterteil (51) und dem Oberteil (52) des Halters (5) angeordnet ist, der dem Halter (5) eine Drehfunktion bietet, indem er den Halter (5) in der vertikalen Achse um einen bevorzugten Winkel dreht.

15. Multifunktionale Schubladenabdeckung (1) nach Anspruch 1, **gekennzeichnet durch** den Welle (7), die eine Bewegung des Körpers (2) und des Halters (5) in der bevorzugten Richtung ermöglicht und in den ersten, am Körper (2) vorgesehenen Schaftschlitz (22) und den zweiten, am Halter (5) vorgesehenen Schaftschlitz (54) platziert ist und die beim Einpassen von beiden Enden in die Bewegungsnut (3) eine Bewegung des Körpers (2) ermöglicht.

## Revendications

1. Couvercle de tiroir multifonctionnel (1), qui permet d'utiliser et de stocker des appareils électroniques dans le véhicule, et peut être monté sur un tiroir, et qui est facile à monter et à démonter, **caractérisé par**
- au moins un corps (2) pouvant se déplacer horizontalement et verticalement, permet de loger l'appareil électronique et recouvre la partie supérieure du tiroir,
- au moins un support (5) sur lequel le dispositif électronique est placé, et qui peut se déplacer de façon circulaire dans l'axe vertical et forme une surface plane en recouvrant la surface supérieure du corps (2) lorsqu'il est fermé,
- au moins un rotateur (6) qui permet de faire tourner le support (5) de façon circulaire perpendiculaire au corps (2) ou au tiroir (A).

2. Couvercle de tiroir multifonctionnel (1) selon la revendication 1, **caractérisé par** le corps (2), de préférence disposé sur un tiroir (A), recouvre la chambre intérieure du tiroir (A) et loge le dispositif électronique, comprend une fente de support (21) dans laquelle le dispositif électronique est placé pour être fixé.

3. Couvercle de tiroir multifonctionnel (1) selon la revendication 2, **caractérisé par** le corps (2), qui est de géométries différentes, et dont les trois côtés sont plans tandis qu'un côté est circulaire.

4. Couvercle de tiroir multifonctionnel (1) selon la revendication 2, **caractérisé par** le corps (2) comprenant une première fente d'arbre (22) qui est située sur l'un de ses côtés plans et qui s'étend d'une extrémité du côté plan à l'autre extrémité de celui-ci et une fente de mouvement (23) sur sa surface tournée vers le tiroir (A) et de préférence sur son côté plan qui ne comprend pas la première fente d'arbre (22)

5. Couvercle de tiroir multifonctionnel (1) selon la revendication 2, **caractérisé par** le corps (2), qui comprend deux fentes de mouvement (23).

6. Couvercle de tiroir multifonctionnel (1) selon la revendication 1, **caractérisé par** au moins une rainure de mouvement (3), sur ou dans laquelle se trouvent les fentes de mouvement (23), qui restreint le mouvement horizontal du corps (2) le long de la zone préférée, et qui fait partie intégrante du corps (2) ou est indépendant du corps (2).

7. Couvercle de tiroir multifonctionnel (1) selon la revendication 1, **caractérisé par** au moins une serrure (4), qui permet de fixer le corps (2) dans une position préférée pendant le mouvement horizontal du corps (2), et qui est positionné sur la fente de support (21) prévue sur le corps (2).

8. Couvercle de tiroir multifonctionnel (1) selon la revendication 1, **caractérisé par** le support (5), qui est positionné sur le corps (2) sur lequel le dispositif électronique est placé, et qui est composé d'une seule pièce ou d'une pluralité de pièces.

9. Couvercle de tiroir multifonctionnel (1) selon la revendication 8, **caractérisé par** le support (5) comprenant au moins une partie inférieure fixe (51) qui permet son intégration au corps (2) et au moins une partie supérieure (52), qui est mobile et situé dans la partie supérieure de la partie inférieure (51), et qui contient de préférence le dispositif électronique.

10. Couvercle de tiroir multifonctionnel (1) selon la revendication 8, **caractérisé par** le support (5) comprenant au moins une dent (53) qui est située sur la partie supérieure (52), peut être disposé sur les points préférés de la partie supérieure (52) et sert à fixer l'appareil électronique sur la partie supérieure (52).

11. Couvercle de tiroir multifonctionnel (1) selon la revendication 8, **caractérisé par** le support (5) comprenant trois dents (53) dont une est positionnée sur la partie supérieure et dont deux sont positionnées sur la partie inférieure de la partie supérieure (52).

12. Couvercle de tiroir multifonctionnel (1) selon la revendication 8, **caractérisé par** le support (5) comprenant des dents (53) qui sont mobiles, peuvent être ajustées en fonction de la taille du dispositif électronique et peuvent contenir des dispositifs électroniques de différentes tailles.

13. Couvercle de tiroir multifonctionnel (1) selon la revendication 8, **caractérisé par** le support (5), dans lequel une deuxième fente d'arbre (54) est prévue sur le bord de la partie inférieure (51) tournée vers le corps (2).

14. Couvercle de tiroir multifonctionnel (1) selon la revendication 1, **caractérisé par** au moins un rotateur (6) qui est positionné entre la partie inférieure (51) et la partie supérieure (52) du support (5), qui fournit une fonction de rotation au support (5) en faisant tourner le support (5) dans l'axe vertical selon un angle préféré.

15. Couvercle de tiroir multifonctionnel (1) selon la revendication 1, **caractérisé par** l'arbre (7), qui permet le mouvement du corps (2) et du support (5) dans la direction préférée et est placé dans la première fente d'arbre (22) prévue sur le corps (2) et la seconde fente d'arbre (54) prévue sur le support (5), et qui, en s'insérant dans la rainure de mouvement (3) à partir de ses deux extrémités, permet le mouvement du corps (2).
